# EUROPEAN PATENT SPECIFICATION

(11) **EP 3 513 903 B1**
(45) Date of publication and mention of the grant of the patent: **30.12.2020**
(21) Application number: 19152097.2
(22) Date of filing: 16.01.2019
(51) Int. Cl.: B23P 15/04, F01D 5/16, F01D 5/28

(54) **FAN BLADE OF A GAS TURBINE ENGINE**
LÜFTERSCHAUFEL EINES TURBINENTRIEBWERKES
PALE DE VENTILATEUR DE MOTEUR À TURBINE À GAZ

(30) Priority: 18.01.2018 US 201815874477
(43) Date of publication of application: 24.07.2019
(73) Proprietor: United Technologies Corporation, Farmington, CT 06032 (US)
(72) Inventor: HANSEN, James O., Glastonbury, CT Connecticut 06033 (US); GRAVES, William R, Amston, CT Connecticut 06231 (US); WEISSE, Michael A., Tolland, CT Connecticut 06084 (US); HERTEL, Christopher J., Wethersfield, CT Connecticut 06109 (US); BALES, Daniel A., Avon, CT Connecticut 06001 (US)
(74) Representative: Dehns

(56) References cited:
- EP-A1- 3 184 180
- EP-A2- 0 926 312
- US-A- 5 947 688
- US-A1- 2002 090 302
- US-A1- 2014 294 594
- US-B1- 6 454 536

## Description

### TECHNICAL FIELD

Exemplary embodiments pertain to fan blades for turbine engines. More particularly, hollow fan blades.

### BACKGROUND

A gas turbine engine typically includes a fan section, a compressor section, a combustor section and a turbine section. There is an ongoing need to reduce the weight of engine components and the cost of production while still providing suitable performance.

Accordingly, it is desirable to provide a fan blade that is strong, durable and lightweight.

EP 0926312 discloses a metal airfoil including a pocket disposed in a side of the airfoil and filled with an elastomeric filler.

US 6454536 discloses a metal airfoil comprising recesses, the recesses are coated with a thin film of adhesion enhancer and filled with a polymeric material.

### BRIEF DESCRIPTION

In a first aspect the present invention provides a fan of a gas turbine engine according to claim 1.

In another aspect the present invention also provides a method of making a fan blade as set forth in claim 8.

Further preferred embodiments are defined by the dependent claims.

### BRIEF DESCRIPTION OF THE DRAWINGS

The following descriptions should not be considered limiting but rather are exemplary. With reference to the accompanying drawings, like elements are numbered alike:
FIG. 1 is a partial cross sectional view of a gas turbine engine;
FIG. 2 is a depiction of a fan blade with pockets;
FIG. 3 is an alternate configuration of a fan blade with pockets;
FIG. 4 is an alternate configuration of a fan blade with pockets;
FIGS 5-7 are cross sections of a fan blade having pockets;
FIG 8 is a flow chart of a method of making a fan blade with pockets.

### DETAILED DESCRIPTION

A detailed description of one or more embodiments of the disclosed apparatus and method are presented herein by way of exemplification and not limitation with reference to the Figures.

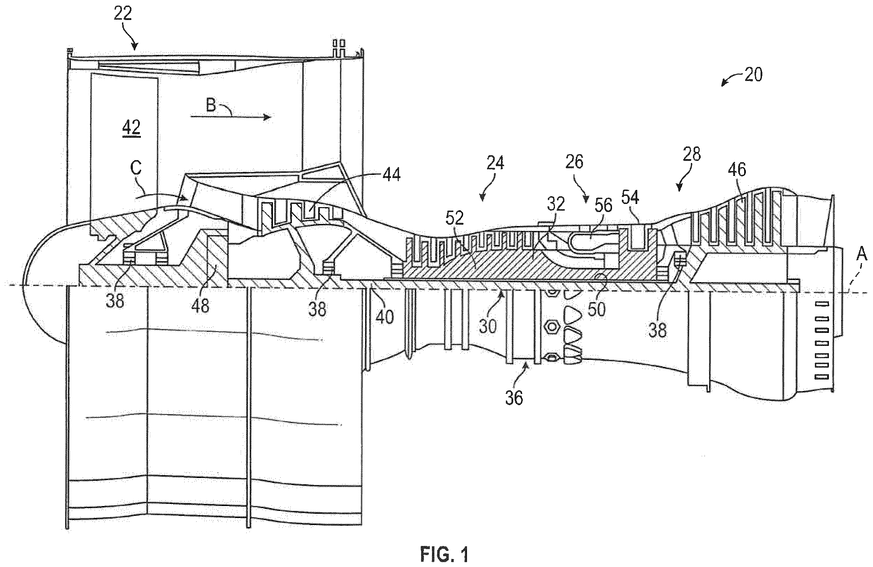

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

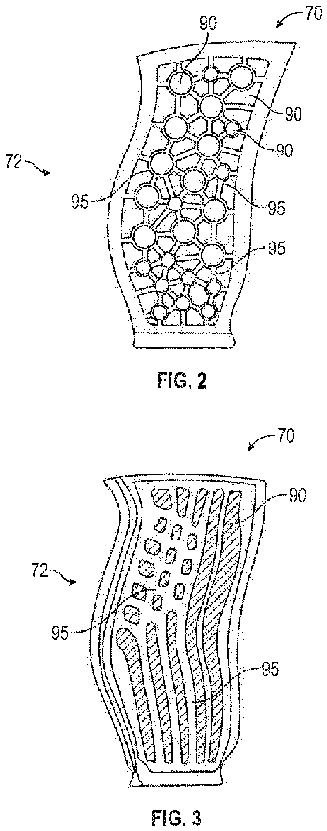

Referring now to FIG. 2, a fan blade 70 of the fan 42 of the engine 20 is illustrated. As is known in the related arts, the fan 42 comprises a plurality of fan blades 70. Each fan blade 70 includes an airfoil 72 and a root or root portion. The root or root portion is received within a slot or cavity of a rotor, rotor disk, fan hub or hub that rotates about axis A of the engine 20. Of course, other means of securement of the fan blades 70 to the hub are contemplated to be within the scope of various embodiments of the present disclosure.

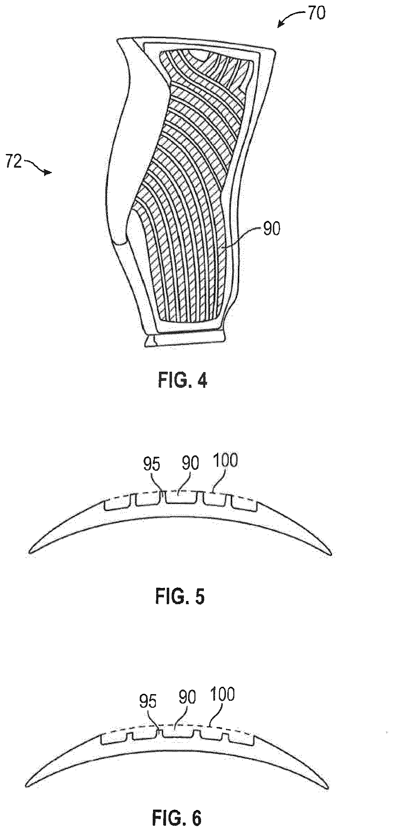

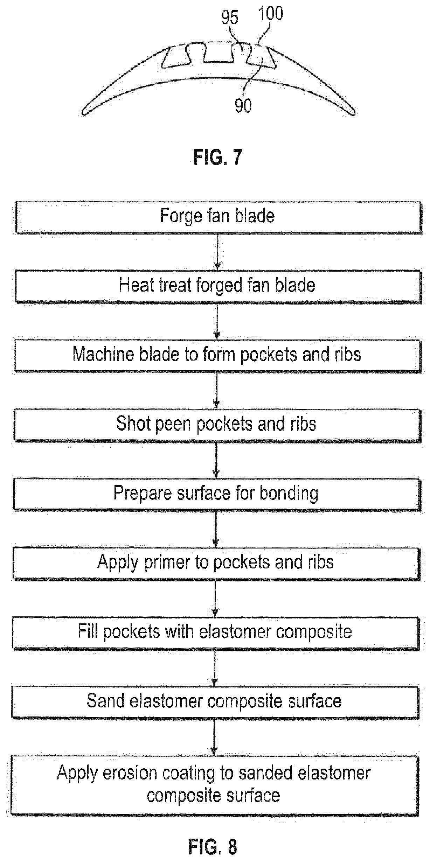

The airfoil 72 is forged from an aluminum alloy such as AA7255 or AA2060 or a titanium alloy such as Ti-6-4. In the example of a Ti-6-4 airfoil, the airfoil may be solution heat treated, then air cooled or liquid quenched, then aged to optimize tensile, yield, low cycle fatigue, and high cycle fatigue strengths. The fact that the airfoil's subsequent processing temperatures are less than 1000 F (540 °C), enables maintaining the significantly improved mechanical properties (up to 20% increased tensile properties and up to 30% increased fatigue properties). The forged airfoil 72 has one or more pockets (recesses) 90 machined into the pressure side (the concave side), suction side (the convex side) or both. It is also contemplated that the pockets may be formed when forging the fan blade. The residual metal between the pockets is referred to herein as the ribs 95. The ribs may have any configuration that yields a fan blade which has sufficient strength under operating conditions. Other exemplary configurations are shown in FIGS 3 and 4. The height of the ribs may be even with the final surface of the airfoil as shown in FIG. 5. FIG 5 shows ribs 95 with a height sufficient to form part of the final surface 100 (in the absence of an erosion coating as described below). The height of the ribs may be less than the final surface of the airfoil as shown in FIG 6 with the remaining height provided by the elastomeric composite. FIG 6 shows ribs 95 having a height insufficient to form part of the final surface 100. In this embodiment, the elastomeric composite, the erosion coating, or a combination thereof may supply the additional height and form part of the final surface 100. The shape of the pockets may be configured with a negative taper to provide mechanical retention of the elastomeric composite as shown in FIG 7. More specifically, the ribs may be tapered to form a pocket which is larger in width at the bottom of the pocket and smaller in width near the airfoil surface.

The pockets may also be shot peened in accordance with AMS 2430 or equivalent, to an intensity up to 9N or equivalent, using steel shot or ceramic beads with a size ranging up to and inclusive of SAE 110, but are not limited thereto. Shot peening can provide additional resistance to metal fatigue during engine operation, but such benefit cannot be captured with current hollow titanium fan blade processing due to such benefit being negated with subsequent required high temperature (above 1000 degrees F (540 °C)) processing.

The surfaces of the pockets are prepared for filling. Preparing the pocket surfaces for filling may include cleaning, etching, grit blasting, laser cleaning, priming or a combination thereof. In some embodiments the pocket surfaces are coated with a primer. Typically the primer is chosen in combination with the elastomeric composite in order to enhance adhesion. For example, if the elastomer employed in the elastomeric composite is a silicone rubber then the primer is typically a silicone rubber as well. After the surface treatment, the pockets are filled with an elastomeric composite. When the elastomeric composite comprises a thermosetting material the elastomeric composite is cured. The airfoil having filled pockets may then be sanded, coated with an erosion coating or both, as needed.

The elastomeric composite comprises an elastomer and glass microspheres, polymer microspheres or a combination thereof. The elastomer can be a thermoplastic or a thermoset. It is desirable for the elastomer to have a compressive modulus sufficient to prevent deformation during a range of loading representative of the part's engine operation. When the elastomer is a thermoset the thermoset is cured, typically by heat, UV radiation, or both. Some thermosets require a catalyst, an initiator, or both for curing. Exemplary elastomeric materials include silicone rubbers such as Bluesil V-622 available from Bluestar Silicones of York, S.C. and Thermosil T7000 available from FMI Chemical of Bloomfield, CT.

The glass or polymer microspheres may be solid, hollow, or a combination thereof. Typical microsphere sizes may be -325/ +120 in mesh size, but are not limited thereto. In some embodiments the microspheres are hollow. It is preferable for the microspheres to have a density which is less than the density of the elastomer. The elastomeric composite may comprise the microspheres in an amount of 10% to 30% by weight, based on the total weight of the elastomeric composite. In addition, weight reducing fillers besides microspheres may also be used, such as gas cavities from the addition of foaming agents to the base polymer.

Exemplary erosion coatings include silicones, which can be applied as a b-staged or adhesively bonded film, or can be spray applied in solution form. The erosion coating may be applied by any useful method. For example, the erosion coating may be applied by spray coating or a film may be applied to the filled pockets and then heated to facilitate bonding to the filled elastomer. It is also contemplated that the erosion coating may be cured separately from, or together with, the elastomeric composite in the pockets.

A method of making the fan blade is shown in FIG. 8. The steps include forging the fan blade and then heat treating the forged blade. The blade is then machined to form the pockets and ribs. The pockets and ribs are then shot peened. The surfaces of the pockets and ribs are prepared for bonding, typically by etching or grit blasting. The primer is applied to the prepared surfaces and then the primed area is filled with the elastomeric composite. The elastomeric composite is cured if needed. The elastomeric composite may then be sanded if necessary and coated with an erosion coating.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The present disclosure will include all embodiments falling within the scope of the claims.

## Claims

1. A fan (42) of a gas turbine engine, comprising:
a plurality of fan blades (70) secured to a rotor, each of the plurality of fan blades (70) having an airfoil (72) secured to the rotor at one end, wherein the airfoil (72) comprises pockets (90) located on the convex and/or the concave side of the airfoil and filled with an elastomeric composite, wherein the elastomeric composite comprises an elastomer and glass microspheres, polymer microspheres or a combination thereof.

2. The fan as in claim 1, further comprising an erosion coating disposed on the elastomeric composite.

3. The fan as in claim 1 or 2, wherein the elastomeric composite comprises a silicone rubber.

4. The fan as in any of claims 1, 2 or 3, wherein the elastomeric composite comprises an elastomer and glass microspheres.

5. The fan as in claim 4, wherein the microspheres are present in an amount of 10 to 30% by weight, based on the total weight of the elastomeric composite.

6. The fan as in any of the preceding claims, wherein the pockets (90) are configured with a negative taper having a larger width at the bottom of the pocket and a smaller width near the surface of the airfoil.

7. The fan as in any preceding claim, wherein the pockets (90) are bordered by ribs (95) having a height sufficient to form part of a final surface (100).

8. A method of making a fan blade (70) comprising:
forging a fan blade (70);
heat treating the fan blade (70);
machining the fan blade (70) to form pockets (90) and ribs (95), wherein the pockets are located on the convex and/or concave side of the airfoil;
shot peening the pockets (90) and ribs (95);
preparing surfaces of the pockets (90) and ribs (95) for bonding;
applying a primer to the prepared surfaces;
filling the pockets (90) with an elastomeric composite comprising an elastomer and glass microspheres, polymer microspheres or a combination thereof.

9. The method of claim 8, wherein preparing surfaces comprises etching, grit blasting, or laser cleaning.

10. The method of claim 8 or 9, wherein the primer comprises a silicon rubber and the elastomeric composite comprises a silicon rubber.

11. The method of any of claims 8, 9 or 10, wherein the elastomeric composite comprises an elastomer and glass microspheres, and preferably wherein the elastomer is a thermoset and the method further comprises curing the thermoset.

12. The method of any of claims 8 to 11, further comprising applying an erosion coating to the elastomeric composite.

13. The method of any of claims 8 to 12, further comprising sanding the elastomeric composite.

14. A gas turbine engine, comprising:
a fan (42) as in any of claims 1 to 7;
a compressor (24);
a combustor (56); and
a turbine (28).

## Patentansprüche

1. Lüfter (42) eines Gasturbinentriebwerkes, umfassend:
eine Vielzahl von Lüfterschaufeln (70), die an einen Rotor gesichert ist, wobei jede der Vielzahl von Lüfterschaufeln (70) ein Schaufelprofil (72) aufweist, das an einem Ende an den Rotor gesichert ist, wobei das Schaufelprofil (72) Taschen (90) umfasst, die sich an der konvexen und/oder der konkaven Seite des Schaufelprofils befinden und mit einem elastomeren Verbundwerkstoff gefüllt sind, wobei der elastomere Verbundwerkstoff ein Elastomer und Glasmikrokugeln, Polymermikrokugeln oder eine Kombination daraus umfasst.

2. Lüfter nach Anspruch 1, ferner umfassend eine Erosionsbeschichtung, die auf dem elastomeren Verbundwerkstoff angeordnet ist.

3. Lüfter nach Anspruch 1 oder 2, wobei der elastomere Verbundwerkstoff einen Siliconkautschuk umfasst.

4. Lüfter nach einem der Ansprüche 1, 2 oder 3, wobei der elastomere Verbundwerkstoff ein Elastomer und Glasmikrokugeln umfasst.

5. Lüfter nach Anspruch 4, wobei die Mikrokugeln in einer Menge von 10 bis 30 Gewichts-% auf Grundlage des Gesamtgewichtes des elastomeren Verbundwerkstoffes vorhanden sind.

6. Lüfter nach einem der vorhergehenden Ansprüche, wobei die Taschen (90) mit einer negativen Verjüngung konfiguriert sind, die an der Unterseite der Tasche eine größere Breite und nahe der Oberfläche des Schaufelprofils eine kleinere Breite aufweist.

7. Lüfter nach einem der vorhergehenden Ansprüche, wobei die Taschen (90) durch Rippen (95) eingefasst sind, die eine ausreichende Höhe aufweisen, um einen Teil einer Endoberfläche (100) zu bilden.

8. Verfahren zum Herstellen einer Lüfterschaufel (70), umfassend:
Schmieden einer Lüfterschaufel (70);
Wärmebehandeln der Lüfterschaufel (70);
maschinelles Bearbeiten der Lüfterschaufel (70), um Taschen (90) und Rippen (95) zu bilden, wobei sich die Taschen an der konvexen und/oder konkaven Seite des Schaufelprofils befinden;
Kugelstrahlen der Taschen (90) und Rippen (95);
Vorbereiten von Oberflächen der Taschen (90) und Rippen (95) zum Bonden;
Auftragen einer Grundierung auf die vorbereiteten Oberflächen;
Füllen der Taschen (90) mit einem elastomeren Verbundwerkstoff, der ein Elastomer und Glasmikrokugeln, Polymermikrokugeln oder eine Kombination daraus umfasst.

9. Verfahren nach Anspruch 8, wobei Vorbereiten von Oberflächen Ätzen, Kiesstrahlen oder Laserreinigen umfasst.

10. Verfahren nach Anspruch 8 oder 9, wobei die Grundierung einen Siliciumkautschuk umfasst und der elastomere Verbundwerkstoff einen Siliciumkautschuk umfasst.

11. Verfahren nach einem der Ansprüche 8, 9 oder 10, wobei der elastomere Verbundwerkstoff ein Elastomer und Glasmikrokugeln umfasst und bevorzugt wobei das Elastomer ein Duroplast ist und das Verfahren ferner Aushärten des Duroplastes umfasst.

12. Verfahren nach einem der Ansprüche 8 bis 11, ferner umfassend Auftragen einer Erosionsbeschichtung auf den elastomeren Verbundwerkstoff.

13. Verfahren nach einem der Ansprüche 8 bis 12, ferner umfassend Schleifen des elastomeren Verbundwerkstoffes.

14. Gasturbinentriebwerk, umfassend:
einen Lüfter (42) nach einem der Ansprüche 1 bis 7;
einen Verdichter (24);
eine Brennkammer (56); und
eine Turbine (28).

## Revendications

1. Ventilateur (42) de moteur à turbine à gaz, comprenant :
une pluralité de pales de ventilateur (70) fixées à un rotor, chacune de la pluralité de pales de ventilateur (70) ayant un profil aérodynamique (72) fixé au rotor au niveau d'une extrémité, dans lequel le profil aérodynamique (72) comprend des poches (90) situées sur le côté convexe et/ou concave du profil aérodynamique et remplies d'un composite élastomère, dans lequel le composite élastomère comprend un élastomère et des microsphères de verre, des microsphères polymères ou une combinaison de ceux-ci.

2. Ventilateur selon la revendication 1, comprenant en outre un revêtement d'érosion disposé sur le composite élastomère.

3. Ventilateur selon la revendication 1 ou 2, dans lequel le composite élastomère comprend un caoutchouc de silicium.

4. Ventilateur selon l'une quelconque des revendications 1, 2 ou 3, dans lequel le composite élastomère comprend un élastomère et des microsphères de verre.

5. Ventilateur selon la revendication 4, dans lequel les microsphères sont présentes en une quantité de 10 à 30 % en poids, sur la base du poids total du composite élastomère.

6. Ventilateur selon l'une quelconque des revendications précédentes, dans lequel les poches (90) sont conçues avec une conicité négative ayant une plus grande largeur au niveau du fond de la poche et une plus petite largeur près de la surface du profil aérodynamique.

7. Ventilateur selon une quelconque revendication précédente, dans lequel les poches (90) sont bordées par des nervures (95) ayant une hauteur suffisante pour faire partie d'une surface finale (100).

8. Procédé de fabrication d'une pale de ventilateur (70) comprenant :
le forgeage d'une pale de ventilateur (70) ;
le traitement thermique de la pale de ventilateur (70) ;
l'usinage de la pale de ventilateur (70) pour former des poches (90) et des nervures (95), dans lequel les poches sont situées sur le côté convexe et/ou concave du profil aérodynamique ;
le grenaillage des poches (90) et des nervures (95) ;
la préparation de surfaces des poches (90) et des nervures (95) pour une liaison ;
l'application d'un apprêt sur les surfaces préparées ;
le remplissage des poches (90) avec un composite élastomère comprenant un élastomère et des microsphères de verre, des microsphères polymères ou une combinaison de ceux-ci.

9. Procédé selon la revendication 8, dans lequel la préparation de surfaces comprend la gravure, le sablage ou le nettoyage au laser.

10. Procédé selon la revendication 8 ou 9, dans lequel l'apprêt comprend un caoutchouc de silicium et le composite élastomère comprend un caoutchouc de silicium.

11. Procédé selon l'une quelconque des revendications 8, 9 ou 10, dans lequel le composite élastomère comprend un élastomère et des microsphères de verre, et de préférence dans lequel l'élastomère est un thermodurcissable et le procédé comprend en outre le durcissement du thermodurcissable.

12. Procédé selon l'une quelconque des revendications 8 à 11, comprenant en outre l'application d'un revêtement d'érosion sur le composite élastomère.

13. Procédé selon l'une quelconque des revendications 8 à 12, comprenant en outre le ponçage du composite élastomère.

14. Moteur à turbine à gaz, comprenant :
un ventilateur (42) selon l'une quelconque des revendications 1 à 7 ;
un compresseur (24) ;
une chambre de combustion (56) ; et
une turbine (28).
